(19) **Europäisches Patentamt / European Patent Office / Office européen des brevets**

(11) **EP 4 679 374 A1**

(12) ## EUROPEAN PATENT APPLICATION

(43) Date of publication:
**14.01.2026 Bulletin 2026/03**

(21) Application number: **25186198.5**

(22) Date of filing: **30.06.2025**

(51) International Patent Classification (IPC):
**G06T 11/00** (2026.01)

(52) Cooperative Patent Classification (CPC):
**G06T 11/006; G06T 2211/424**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.07.2024 US 202463669796 P**

(71) Applicant: **Carl Zeiss X-Ray Microscopy, Inc.**
**Dublin, California 94568 (US)**

(72) Inventors:
• **Yang, Faguo**
  **Dublin, CA, 94568 (US)**
• **Andreyev, Andriy**
  **Dublin, CA, 94568 (US)**
• **Andrew, Matthew**
  **Dublin, CA, 94568 (US)**

(74) Representative: **Gulde & Partner**
**Patent- und Rechtsanwaltskanzlei mbB**
**Berliner Freiheit 2**
**10785 Berlin (DE)**

(54) **MASKED IMAGE RECONSTRUCTION FOR X-RAY MICRO TOMOGRAPHY SYSTEMS**

(57) Iterative reconstruction performance is improved by saving or better utilizing memory by introducing an image mask or bounding box or other volumetric mask. These are used to reduce the reconstructed volume with respect to the field of view, FOV, possibly even to the sample itself.

EP 4 679 374 A1

## Description

### FIELD OF THE DISCLOSURE

The present disclosure relates to the field of X-ray micro tomography systems. X-ray micro tomography systems provide high-resolution, non-destructive imaging of internal structures in samples. The systems are utilized in a variety of industrial and research applications, such as semi-conductor industry, biology, oil and gas exploration, mining, manufacturing, materials science, clinical research, and failure analysis, to list some examples. The systems provide the ability to visualize features in samples without the need to cut and slice the samples.

### TECHNOLOGICAL BACKGROUND

This application claims priority from U.S. Provisional Application No. 63/669,796, filed on July 11, 2024.

X-ray micro tomography systems include X-ray projection systems that produce projection data of the sample and computer systems that reconstruct tomographic volumes of the sample from the projection data. In operation, the X-ray projection system executes a scan of a sample at different angles to produce the projection data. During a scan, X-rays are directed to the sample, and are absorbed or scattered by the sample as the X-rays travel through the sample. The X-rays not absorbed or scattered away are transmitted through and modulated by the sample. A detector system receives the transmitted X-rays, and creates an image representation, in pixels, of the received X-rays. The series, often thousands, of X-ray projections at different angles produced from the scan form the projection data of the sample. Then, the computer system accesses the projection data, and applies tomographic reconstruction algorithms to the projection data to reconstruct volume datasets of the sample. A volume dataset is a three dimensional (3D) representation of the sample, and a slice is a two dimensional (2D) cross-sectional image of the sample based on the volume dataset.

The most commonly used reconstruction algorithms fall into a class of reconstruction techniques termed analytical reconstruction. The objective is to find a closed-form solution to the problem of reconstructing an object's internal structure from its projections. The most common analytical method is filtered back projection (FBP). The projections are first processed using a high-pass filter, usually a ramp filter, in the frequency or space domain. Then, each filtered projection is "smeared" back onto the imaging plane as if each data point emits back uniformly in the shape of the original beam. These back projections from all angles are summed up to produce the reconstructed volume, which approximates the object's internal structure. The filtering and back projection operations collectively help in obtaining a more accurate and less blurred reconstruction of the original object. One type of filtered back projection is FDK algorithm. It is used often with X-ray micro tomography systems since it reduces artifacts associated with the typical cone-shaped beam. See Feldkamp, L.A., Davis, L.C. and Kress, J.W. (1984) Practical Cone-Beam Algorithm. Journal of the Optical Society of America A, 1, 612-619.

Iterative reconstruction is another approach that reconstructs slices from successive estimates of the projection data by forward projecting the estimated reconstruction volume. Multiple iterations of the estimated projection data for each view angle are executed for this purpose. During each iteration, the estimated projection data are compared to the actual (measured) projection data. The result of each comparison is used to make corrections to the current estimation of the reconstructed volume, thereby creating a new estimate of the reconstructed volume. When the estimated (forward projected) and measured projection data are close enough, the iteration process is said to have converged. Exemplary iterative reconstruction algorithms include algebraic reconstruction technique (ART), simultaneous reconstruction technique (SIRT) and iterative least-squares technique (ILST). The algorithms typically differ in the way the measured and estimated projection data are compared and the kind of correction applied to the current estimate. See Lin, Q., Andrew, M., Thompson, W., Blunt, M.J. and Bijeljic, B. (2018) Optimization of image quality and acquisition time for lab-based X-ray microtomography using an iterative reconstruction algorithm; Advances in Water Resources 115, 112-124.

With iterative reconstruction methods, physical effects such as X-ray focal point size, scatter, beam hardening, location-dependent point spread functions can be modeled in the system matrix. In addition, statistical techniques, such as count starvation, can also be employed. This flexibility enables iterative reconstruction to often deliver a reconstruction image with better resolution and contrast than filtered back projection.

Analytical reconstruction and iterative reconstruction methods have advantages and disadvantages relative to each other. FBP, for example, provides good image quality with relatively low processing overhead, which increases throughput and reduces cost. A disadvantage of FBP is susceptibility to image noise in the projection data. Advantages of iterative reconstruction include generally improved image quality, less susceptibility to image noise, reduced image artifacts, and the ability to reconstruct an optimal image in the case of incomplete projection data. Disadvantages of iterative reconstruction include complexity associated with selection of regularization parameters applied to the iterative reconstruction algorithm, longer processing time, and increased computational cost. For example, iterative reconstruction methods will generally need much more computation and more computer system memory. For example, in current commercial systems, the detector spatial precision results in image volumes of $3000^3$ vox-

els that occupy 100 gigabytes (GB) in 4-byte float precision. The requirements can tax some computer systems.

GENERAL DESCRIPTION

Processing the quantity of voxels in iterative reconstruction algorithms can be prohibitively slow. In addition, the memory requirement is still challenging for state-of-the-art graphical processing units (GPUs) and other coprocessors, preventing the adoption of higher resolutions or larger reconstructed volumes.

This disclosure concerns improving iterative reconstruction performance and more specifically saving or better utilizing memory by introducing a 3D volume mask or 3D bounding box, e.g., a cuboid. This is used to reduce the volume to be reconstructed with respect to the field of view (FOV), possibly the volume can be even reduced to the reconstruction volume of the sample itself. It is noted that in many types of samples, such as semiconductor chips (and other high aspect ratio objects), approximately ninety percent of the reconstructed volume is air. Thus, the computational savings can be very high when these techniques are deployed.

In general, the method comprises determining masks to define a reconstruction volume within a field of view of an X-ray tomography system and performing iterative reconstruction based on the masks to reduce reconstruction volume in the field of view.

In embodiments, 3D volume masks are determined based on projections. The 3D volume masks could also be determined in embodiments based on images from a light camera and/or a fast reconstruction (preview scan).

In embodiments, image masks (2D) can be backprojected to obtain a volume mask and/or volumetric bounding boxes specified based on one or more image masks.

It is further preferred to obtain volume masks through other means such as pre-scans, low resolution reconstructions and/or from images from visual light cameras. There are also preferred ways to obtain the 2D mask from the projection images including segmentation techniques such as thresholding, region growing and so on. Still another option is to use 3D models of the object (CAD or calculated from visual light camera 360-degree overviews). These can be preferably used to create the volume masks from which projection image masks can be derived.

Also, the iterative reconstruction can be performed in which only X-ray line integrals connecting to the projection image masks are considered in back and forward projection.

In general, according to one aspect, the disclosure features a method for masked iterative image reconstruction in an X-ray tomography system. This method comprises acquiring sample data characterizing the sample (studied object), determining one or more masks from the sample data to define a reconstruction volume within a portion of a field of view (FOV) of the X-ray tomography system. An iterative reconstruction is then performed based on the one or more masks to reduce the reconstruction volume within the field of view.

The sample (studied object) data can be acquired in several ways, such as by obtaining X-ray projections of the sample, obtaining images of the sample with a light camera, executing a fast preview scan, performing pre-scans and low resolution reconstructions and/or obtaining 3D models of the sample, wherein the pre-scans are X-ray projection scans. In general, the iterative reconstruction methodology always requires X-ray projection data. Acquiring the sample data may therefore always include obtaining X-ray projection data. In other words, acquiring the sample data may include obtaining X-ray projections of the sample with the one or more masks being determined based on the X-ray projections. In an embodiment, acquiring the sample data may further include obtaining images of the sample with a light camera with the one or more masks being determined based on the images. In an embodiment, acquiring the sample data may further include executing a fast preview scan with the one or more masks being determined based on the fast preview scan. In an embodiment, acquiring the sample data may further include performing pre-scans and low resolution reconstructions with the one or more masks being determined based on the low resolution reconstructions, wherein the pre-scans are X-ray projection scans. In an embodiment, acquiring the sample data may further include obtaining 3D models of the sample with the one or more masks being determined from the 3D models. In other words, acquiring the sample data by obtaining X-ray projection data may aid performing iterative reconstruction of the X-ray projection data, while the one or more masks may be determined based on other data.

In some embodiments, the one or more masks are image masks that are backprojected to obtain a volume mask.

The one or more masks can be volumetric bounding boxes specified based on one or more image masks.

Techniques such as thresholding and/or region growing are preferably employed to create the one or more masks. In addition, user guidance (user input) is preferably employed such as enabling a user to define, modify, and/or delimit the masks such as via a user interface on a computer.

In other words, techniques such as thresholding or region growing may be used to create the one or more masks along with optionally employing user guidance to define and/or delimit the masks.

In an embodiment, the iterative reconstruction is performed such that X-ray lines from X-ray source to detector outside the masks are ignored to improve reconstruction performance.

In general, according to another aspect, the disclosure features an X-ray micro tomography system for masked iterative image reconstruction. The system comprises an X-ray source system for/configured for generating an X-ray beam, a rotation stage for/configured for holding and rotating a sample in the X-ray beam, and a detector system for/configured for capturing X-ray projections of the sample. Finally, a computer system is configured to determine one and/or more masks to define a reconstruction volume within a field of view (FOV) of the X-ray tomography system and perform iterative reconstruction based on the one and/or more masks to reduce the reconstruction volume within the field of view such as according to the previously described method.

In general, according to another aspect, the disclosure features a computer program product for masked iterative image reconstruction in an X-ray micro tomography system, the computer program product comprising a non-transitory computer readable medium having program instructions embodied thereon, the program instructions executable by a processor to perform a method comprising determining one or more masks to define a reconstruction volume within a field of view (FOV) of the X-ray tomography system and performing iterative reconstruction based on the one or more masks to reduce the reconstruction volume within the field of view according to the method as described herein.

The above and other features of the disclosure including various novel details of construction and combinations of parts, and other advantages, will now be more particularly described with reference to the accompanying drawings and pointed out in the claims. It will be understood that the particular method and device embodying the disclosure are shown by way of illustration and not as a limitation of the disclosure. The principles and features of this disclosure may be employed in various and numerous embodiments without departing from the scope of the disclosure.

BRIEF DESCRIPTION OF THE DRAWINGS

In the accompanying drawings, reference characters refer to the same parts throughout the different views. The drawings are not necessarily to scale; emphasis has instead been placed upon illustrating the principles of the disclosure. Of the drawings:

Fig. 1 is a schematic diagram of an X-ray micro tomography system to which the methods of the present disclosure are applicable;

Figs. 2A, 2B and 2C are schematic views of samples and possible volume masks;

Figs. 3A, 3B and 3C are schematic views of samples and volume masks with more complex profiles;

Fig. 4 is a flow diagram showing a method for masked iterative image reconstruction; and

Fig. 5 is a flow diagram showing a method for masked iterative image reconstruction according to an embodiment.

DETAILED DESCRIPTION OF THE DRAWINGS

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the embodiments and features of the present disclosure to those skilled in the art.

As used herein, the term "and/or" includes any and all combinations of one or more of the associated listed items. Further, the singular forms and the articles "a", "an" and "the" are intended to include the plural forms as well, unless expressly stated otherwise. It will be further understood that the terms: includes, comprises, including and/or comprising, when used in this specification, specify the presence of stated features, integers, steps, operations, elements, and/or components, but do not preclude the presence or addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

The electronic or electric devices and/or any other relevant devices or components according to embodiments of the present disclosure described herein may be implemented utilizing any suitable hardware, firmware (for example an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, for example on a PCB or another kind of circuit carrier. The conducting elements may include metallization, for example surface metallizations and/or pins, and/or may include conductive polymers or ceramics. Further electrical energy might be transmitted via wireless connections, for example using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

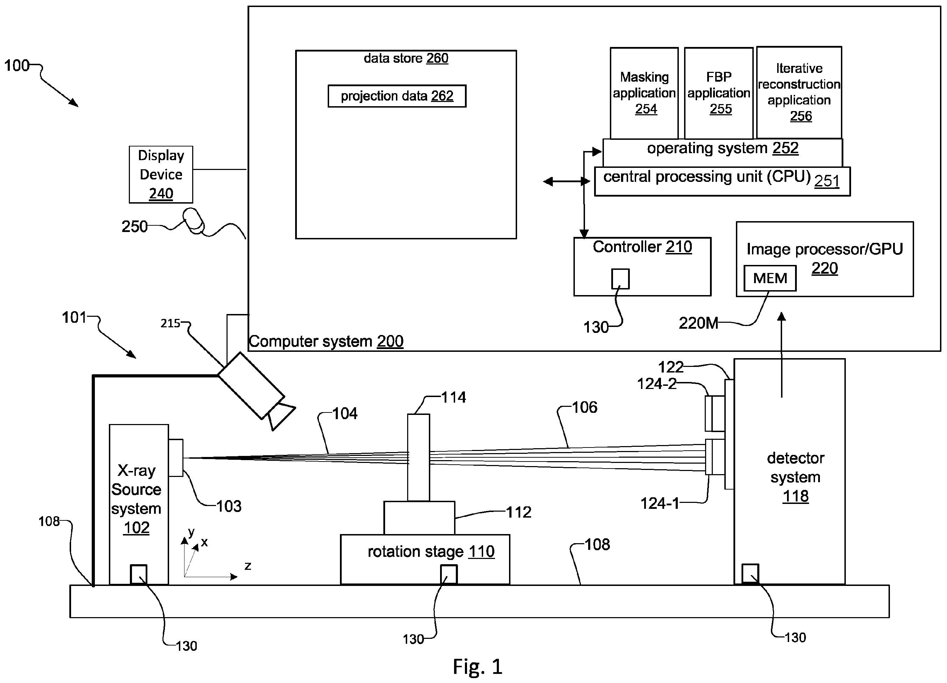

Fig. 1 is a schematic diagram of an X-ray micro tomography system 100 to which the methods and workflows of the present disclosure are applicable.

The X-ray micro tomography system 100 combines an X-ray microscopy system 101 and a computer system 200 for receiving projections of a sample and calculating volume datasets from those projections.

The X-ray microscopy system includes the X-ray source system 102 that generates a typically polychromatic X-ray beam 104 and a rotation stage 110 with a sample holder 112 for holding and rotating the sample 114 in the X-ray beam 104 from the X-ray source system 102. Images or X-ray projections are captured by the detector system 118. The X-ray source system 102, the rotation stage 110, and the detector system 118 are mounted to a base 108 of the X-ray CT system 100. The computer system 200 typically receives and processes these projections and provides general control of the system 100. The computer system 200 or another computer will typically perform tomographic reconstruction using the X-ray projections to create volume datasets.

The X-ray source (X-ray source system) 102, in one example, is a cone-beam, polychromatic X-ray source. The polychromatic X-ray source is preferably a laboratory X-ray source because of its ubiquity and relatively low cost. Nonetheless, synchrotron sources and/or accelerator-based sources are other alternatives.

Common laboratory X-ray sources include an X-ray tube, in which electrons are accelerated in a vacuum by an electric field and shot into a target piece of metal, with X-rays being emitted as the electrons decelerate in the metal.

In one example, the X-ray source 102 is a rotating anode target type or micro-focused source, with a tungsten target. Targets that include molybdenum, gold, platinum, silver and/or copper also can be employed. Preferably, a transmission target configuration of the X-ray source 102 is used in which an electron beam strikes the thin target 103 from its backside. The X-rays emitted from the other side of the target 103 are then used as the X-ray beam 104.

When the sample 114 is exposed to the X-ray beam 104, the X-ray photons transmitted through the sample form an attenuated X-ray beam 106 that is received by the detector system 118. In some examples, an objective lens such as a zone plate lens is used to form an image onto the detector system 118 of the X-ray imaging system 100.

In a configuration of the detector system 118, a magnified projection image of the sample 114 is formed on the detector system 118 with a geometrical magnification that is equal to the inverse ratio of the source-to-sample distance and the source-to-detector distance. Generally, the geometrical magnification provided by the X-ray stage is between 2x and 100x, or more. In this case, the resolution of the X-ray image is limited by the focus spot size and/or virtual size of the X-ray source system 102.

To achieve high resolution, an embodiment of the X-ray micro tomography system 100 further utilizes a very high resolution detector 124-1 of the detector system 118 in conjunction with positioning the sample 114 close to the X-ray source system 102. In one implementation of the high-resolution detector 124-1, a scintillator is used in conjunction with a microscope objective to provide additional optical magnification in a range between 2x and 100x, or more.

Other detectors can be included as part of the detector system 118 in the illustrated X-ray CT system 100. For example, the detector system 118 can include a lower resolution detector 124-2. This could be a flat panel detector and/or a detector with a lower magnification microscope objective, in examples. Configurations of one, two, or even more detectors 124 of the detector system 118 are possible. The use of several detectors results in advantages such as higher accuracy of the collected data and improved reconstruction fidelity.

Preferably, two or more detectors 124-1, 124-2 are mounted on a rotating turret 122 of the detector system 118, so that they can be alternately rotated into the path of the attenuated beam 106 from the sample 114.

Typically, based on operator defined parameters, the controller 210 of the computer system 200 instructs the rotation stage 110 via the control interface 130 to position the sample 114 and the detector 124 for the desired imaging set up. After completion, the controller 210 rotates the sample 114 relative to the beam 104 to perform the CT scan of the sample 114 and the projection data 262 are saved to a datastore 260.

In an example, an optical camera 215, operating in the visible and/or infrared, is also positioned to image the sample 114 on the stage 110. This can be useful to monitor the sample. In particular, it can be used for collision avoidance so that the sample does not collide with parts of the system. This is described in U.S. Pat. No. 11,821,860, by Omlor and Chang. According to aspects of embodiments, the optical camera 215 is also employed in some cases to generate reconstruction masks such as image masks and/or volume masks that locate the extent of the sample 114 or a portion of the sample 114.

In one example, the computer system 200 includes a GPU and/or another acceleration coprocessor 220 optimized for image manipulation. The system 200 analyzes the X-ray projections and performs the calculations necessary for tomographic reconstructions created from the X-ray projections. The coprocessor 220 has its own memory 220M that will hold the image volumes as they are being calculated.

A display device 240, connected to the computer system 200, displays information from the X-ray CT system 100. An input device 250 such as a touch screen, keyboard, and/or computer mouse enables interaction between an operator, the computer system 200, and the display device 240.

Using user interface applications executing on the computer system 200 that display their interfaces on the display device 240, in one example, the operator defines/selects to perform CT scan or calibration. These include X-ray acceleration voltage settings, and settings for defining the X-ray energy spectrum of the scan and exposure time on the X-ray source system 102. The operator also typically selects other settings such as the number of X-ray projection images to create for the sample 114, and/or the angles to rotate the rotation stage 110.

The computer system 200, with the assistance of its coprocessor 220, accepts the image and/or projection information from the detector system 118 associated with each rotation angle of the sample 114. The image coprocessor 220 combines the projection images using reconstruction algorithms to create 3D tomographic reconstructed volume information for the sample 114.

According to the disclosure, the computer system 200 executes a masking application 254 for determining 3D volume masks such as 3D bounding boxes for isolating the sample 114 in the different projections. It can either be performed automatically or with optional user guidance. In addition, user (operator) guidance can be employed such as enabling a user (operator) to define, modify, and/or delimit the masks such as via a user interface rendered by the computer. More generally, the masking application generates reconstruction masks such as 2D image masks and 3D volume masks for locating the sample or portion of the sample and specifically the portion of the system's field of view that is to be reconstructed. These masks are accessed by the iterative reconstruction application 256 for reconstructing the projection data 262 while optimizing the memory 220M required in the coprocessor 220. In addition, a filtered back projection (FBP) application 255 is employed in some examples to reconstruct volume masks from images and/or projections.

The masking application 254, FBP application 255, and the iterative reconstruction 256 run on the operating system 252. The operating system 252, in turn, is executed by the computer's central processing unit(s) (CPU) 251.

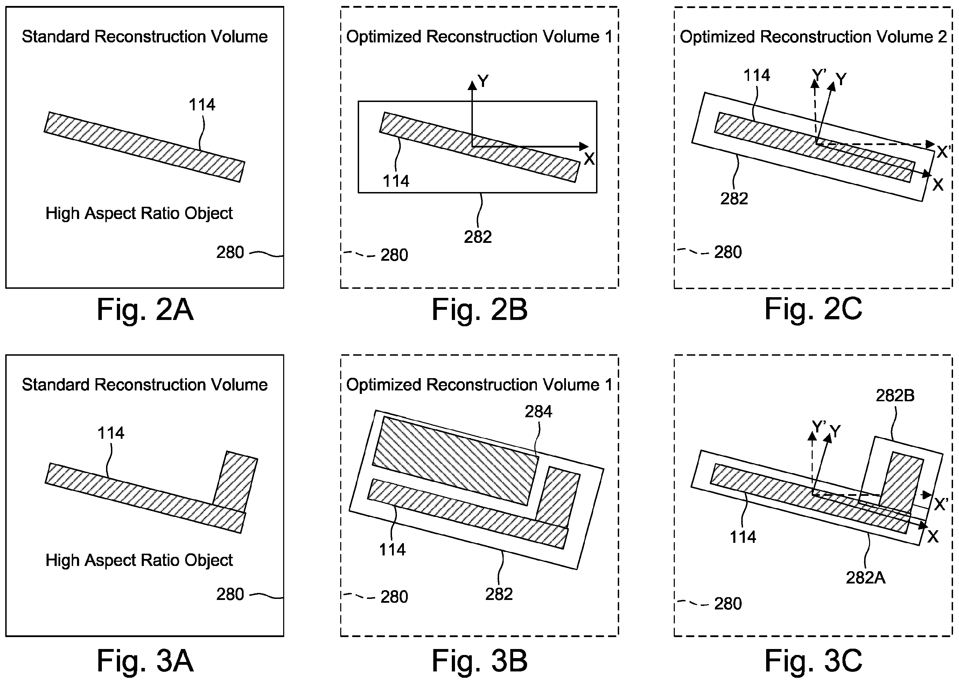

Figs. 2A-2C show an example of the sample 114 in the field of view 280 of the system 100. These figures show why it is necessary to use a volume mask and several possible mask schemes.

As shown in Fig. 2A, the exemplary sample 114 occupies only a small portion (typically less than 20%) of the system's FOV 280, as is common in most use-cases. This large unoccupied portion of the field of view will make iterative reconstruction inefficient especially in terms of the amount of coprocessor memory 220M consumed and the calculation time required by the coprocessor 220. The method of the present disclosure thus offers advantages in terms of reducing the amount of memory consumed and reducing the calculation time required.

As shown in Fig. 2B, an image mask 282 can be derived from acquired projections and/or image data, such as from a fast preview low-resolution scan and/or the light camera 215 and/or from any projections obtained of the sample (studied object) 114.

As shown in Fig. 2C, the image mask 282 is further optimized by being reoriented along the longest axis of the sample (studied object) 114 in some embodiments. In general, reconstruction uses a sample coordinate system. In this coordinate system, samples are motionless, while source and detectors are moving. Then, a transform is applied to the source and detector location for each view once, then the transformed source and detector locations are used to perform the reconstruction.

Figs. 3A-3C show examples of the sample 114 in the field of view 280 of the system 100.

As shown in the embodiment of Fig. 3A, the exemplary sample 114 has a composite shape (an L shape in this example) and again occupies only a small portion (typically less than 20%) of the system's FOV 280.

As shown in Fig. 3B, an image mask 282 can be derived from acquired projection data and/or optical images. In this case, the single optimized and reoriented reconstruction volume still includes significant empty volume 284.

As shown in Fig. 3C, a further optimized complex image mask including submasks or sub volume masks 282A, 282B is employed that additionally has been reoriented along the major axis of the studied object and limited to the object's unique shape. The sub volume masks 282A and 282B can be made to slightly overlap for smoother blending.

In different examples, several image masks of the same sample are reconstructed via the FBP application 255 to create volume masks for locating the sample 114. This reconstruction uses a sample coordinate system. In this coordinate system, samples are motionless, while source and detectors are moving. Then, a transform is applied to the source and detector location for each view once, then the transformed source and detector locations are used to perform the reconstruction.

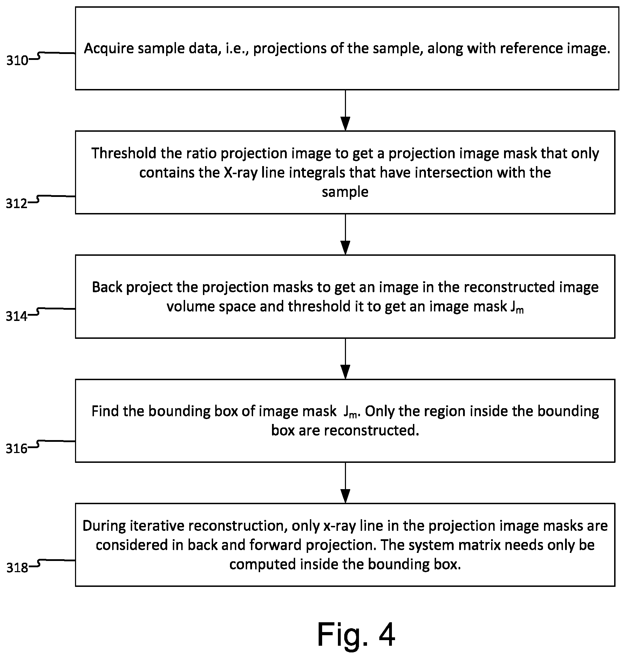

Fig. 4 is a flow diagram showing steps of a method for performing iterative reconstruction that limits reconstruction to a determined volume mask. This volume mask can be based on one or more image masks that have complicated shapes in different examples, as shown in Fig. 3C rather than a simple bounding box that is a rectangle in 2D and a cuboid in the three dimensions of the volume mask. In the following iterative image reconstruction process (method), only image voxels inside the volume mask are stored and reconstructed. This reduces computer memory requirements and computational power requirements, and/or time to compute.

In CT data acquisition and image reconstruction methodology, an air calibration scan or reference projection image is commonly acquired before, during and/or after the scan of the sample. The air calibration scan or reference projection image is typically taken when only air is in the field of view 280. In addition, sample projections are also acquired of the sample at each angle in step 310 to thereby obtain sample data defining the extent of the sample and/or a region of interest within the sample relative to the FOV of the system.

An arbitrary detector pixel is denoted as $u$. The reference image is denoted as $I_{u,0}$ and the projection image when the sample 114 is in the field of view 280 is denoted as $I_u$ for the pixel.

In step 312 the proportion $I_u/I_{u,0}$ is evaluated for each pixel. When this ratio approaches 1.0, it can be assumed that this X-ray line (from X-ray source 102 to the pixel u) of the detector 124 does not interact with the sample 114. Performing this analysis for each pixel yields the projection and/or image masks that contain the sample 114 for each projection angle.

In step 314, the collection of projections and/or image masks at each projection angle are back projected to get a 3D volume mask using the FBP application 255. Generally, the volume mask can be irregular, that is, could be in any shape, but in the following discussions, bounding boxes are used that are a rectangle in 2D and a cuboid in 3D.

Based on this assumption, for each projection image, the region or mask that only contains the sample projections is used.

The bounding box (2D bounding curvature or 3D bounding surface), which may be a rectangle in 2D and a cuboid in 3D, is derived by finding the minimal part

$$\frac{I_u}{I_{u,0}} < 1 - \varepsilon$$

(traced from all detector pixels where , with $0 < \varepsilon < 1$ serving as a configurable threshold value) of the projection images along X and Y axis as well as along Z direction in 3D case in step 316. In a preferred embodiment $\varepsilon = 0$.

In addition, this segmentation/thresholding operation to create the projection domain images from the original datasets can be alternatively preferred computed by a variety of means, including automated global thresholding (e.g. Otsu's method, iso-data method etc.), or region growing techniques.

According to a method, after obtaining the projection masks for each projection angle, which could be irregular in shape, a back projection of all the projection masks is performed to get an image in the reconstruction volume space and this image is thresholded to get the volume mask $J_m$ that only contains the sample, from which a 3D bounding box (bounding surface) is defined to limit the reconstruction region inside the field of view 280.

In step 318, iterative reconstruction is performed on the projections using the iterative reconstruction application 256. Unlike FBP, which assumes a direct inversion from projection data to image, the iterative reconstruction involves a more complex process where an initial image estimate is progressively refined. This is achieved through repeated cycles of projections and back-projections, adjusting the image model based on the differences between the measured projection data and the simulation derived from the image estimate. Each iteration has two major steps: a forward projection of the current image estimate to create simulated projection data, and a backward projection that corrects the image estimate based on discrepancies between the simulated and actual data. These steps are guided by optimization algorithms that aim to minimize a predefined objective function, typically balancing fidelity to the data with regularization terms that impose smoothness and/or other desired image characteristics.

In this iterative reconstruction process, only X-ray lines in the projection and/or image masks and/or volume masks are considered in backward and forward projection steps. The system matrix needs only be computed inside the bounding box and/or projection masks, which reduces computational costs.

As illustrated in Fig. 2C, the image volume axis can be additionally reoriented for further optimization. In this case, principal component analysis (PCA) or similar can be used on the back-projected volume masks in order to find the first principal direction of the sample, e.g., for orienting the X axis along the longest object variation.

Further expanding on this idea, for objects with more complex shapes that cannot be perfectly fit into a single cuboid volume, such as L-shape objects, a solution where the reconstructed volume can be composed of two or more cuboid sub-volumes or bounding boxes is employed to more closely align to the object shape. This is shown in Fig. 3C.

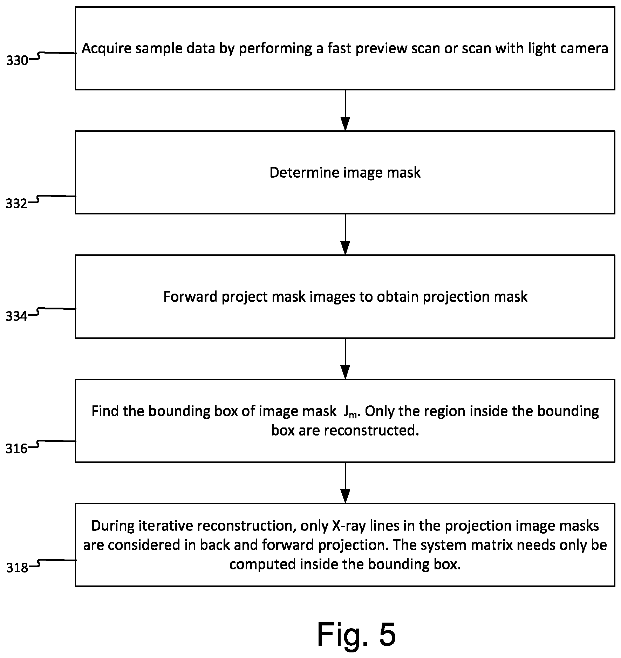

Fig. 5 is a flow diagram showing steps of a method (a process) for performing iterative reconstruction that limits reconstruction to a determined mask or bounding box by using an optical camera or fast preview scan.

In step 330, sample data is acquired such as by a fast (low resolution) preview X-ray scan or a scan with the visual light camera 215. These scans are processed to remove any background to thereby isolate the sample or a region of interest of the sample 114.

These preview scans are often an independently acquired faster scan (i.e. at lower resolution, with a lower binning, or using fewer projections etc.) or could be a derived dataset created from the original dataset by down-sampling the original data (and defining a correspondingly coarse volume definition).

In step 332, a fast reconstruction is performed of the isolated sample such as with filtered back projection in the case of a fast preview scan to obtain the volume mask.

If the scan is performed with the light camera 215, then any of the common 2D to 3D reconstruction techniques are employed such as projective reconstruction, affine reconstruction or Euclidean reconstruction.

In an example, rather than obtaining images of the sample with the light camera 215 and performing a reconstruction, a 3D model of the sample 114 is used to define the volume mask.

In other words, in this embodiment, the scan is performed with the light camera 215, and, in this case, any of the common 2D to 3D reconstruction techniques such as projective reconstruction, affine reconstruction or Euclidian reconstruction are employed. This approach is particularly suitable when metric accuracy, physical alignment, and/or pose fidelity is of preferred importance.

In an alternative embodiment, the scan is not performed with the light camera 215. Instead, a 3D model of the sample 114 is used to define the volume mask. This may be preferred in cases where inherent scale and/or avoiding lighting variations are of preferred importance.

In step 334, forward projections of the volume mask are performed for each angle to obtain projection image masks for each view.

Then, during the following iterative reconstruction, X-ray lines (from X-ray source to detector cell center) outside the projection image mask for the corresponding angle and/or outside the volume mask are ignored to improve reconstruction performance in steps 316 and 318. This approach also reduces computational costs.

While this disclosure has been particularly shown and described with references to preferred embodiments thereof, it will be understood by those skilled in the art that various changes in form and details may be made therein without departing from the scope of the disclosure encompassed by the appended claims.

## List of reference signs

| | |
|---|---|
| 100 | X-ray micro tomography system |
| 101 | X-ray microscopy system |
| 102 | X-ray source system |
| 103 | Target |
| 104 | X-ray beam |
| 106 | Attenuated X-ray beam |
| 108 | Base |
| 110 | Rotation stage |
| 112 | Sample holder |
| 114 | Sample |
| 118 | Detector system |
| 122 | Rotating turret |
| | |
| 124-1 | High-resolution detector |
| 124-2 | Lower resolution detector |
| 130 | Control interface |
| 200 | Computer system |
| 210 | Controller |
| 215 | Optical camera |
| 220 | Coprocessor |
| 220M | Memory |
| 240 | Display device |
| 250 | Input device |
| 251 | CPU |
| 252 | Operating system |
| 254 | Masking application |
| 255 | FBP application |
| 256 | Iterative reconstruction application |
| 260 | Datastore |
| 262 | Projection data |
| 280 | Field of view |
| 282 | Image mask |
| 282A | Image submask |
| 282B | Image submask |
| 284 | Empty volume |

## Claims

1. A method for masked iterative image reconstruction in an X-ray tomography system (100), the method comprising:

acquiring sample data characterizing the sample (114);
determining one or more masks from the sample data to define a reconstruction volume (282A, 282B) within a portion of a field of view, FOV, (280) of the X-ray tomography system (100); and
performing iterative reconstruction based on the one or more masks to reduce the reconstruction volume (282A, 282B) within the field of view (280).

2. The method of claim 1, wherein acquiring the sample data comprises obtaining X-ray projections of the sample (114) with the one or more masks being determined based on the X-ray projections.

3. The method of any of claim 1 or 2, wherein acquiring the sample data further comprises obtaining images of the sample (114) with a light camera (215) with the one or more masks being determined based on the images.

4. The method of any of claims 1 to 3, wherein acquiring the sample data further comprises executing a fast preview scan with the one or more masks being determined based on the fast preview scan.

5. The method of any of claims 1 to 4, wherein acquiring the sample data further comprises performing pre-scans and low resolution reconstructions with the one or more masks being determined based on the low resolution reconstructions.

6. The method of any of claim 1 or 2, wherein acquiring the sample data further comprises obtaining 3D models of the sample (114) with the one or more masks being determined from the 3D models.

7. The method of any of claims 1 to 5, wherein the one or more masks are image masks (282) that are backprojected to obtain a volume mask.

8. The method of any of claims 1 to 5, wherein the one or more masks are volumetric bounding boxes specified based on one or more image masks (282).

9. The method of any of claims 1 to 5, further comprising using segmentation techniques to create the one or more masks.

10. The method of claim 9, further comprising employing user guidance to define and/or delimit the masks.

11. The method of any of claims 1-10, wherein the iterative reconstruction is performed such that X-ray lines from an X-ray source to a detector (124-1, 124-2) outside the masks are ignored to improve reconstruction performance.

12. An X-ray micro tomography system (100) for masked iterative image reconstruction, the system comprising:

an X-ray source system (102) configured for generating an X-ray beam (104);
a rotation stage (110) configured for holding and rotating a sample (114) in the X-ray beam (104);
a detector system (118) configured for capturing X-ray projections of the sample (114); and
a computer system (200) configured for:

determining one or more masks to define a reconstruction volume (282A, 282B) within a field of view, FOV, (280) of the X-ray tomography system (100); and
performing iterative reconstruction based on the one or more masks to reduce the reconstruction volume (282A, 282B) within the field of view (280), according to the method of any of claims 1-11.

13. A computer program product for masked iterative image reconstruction in an X-ray micro tomography system (100), the computer program product comprising a non-transitory computer readable medium having program instructions embodied thereon, the program instructions executable by a processor to perform a method comprising determining one or more masks to define a reconstruction volume (282A, 282B) within a field of view, FOV, (280) of the X-ray tomography system (100) and performing iterative reconstruction based on the one or more masks to reduce the reconstruction volume (282A, 282B) within the field of view (280) according to the method of any of claims 1-11.

**Fig. 1**

EP 4 679 374 A1

Fig. 2A

Fig. 2B

Fig. 2C

Fig. 3A

Fig. 3B

Fig. 3C

EP 4 679 374 A1

310 — Acquire sample data, i.e., projections of the sample, along with reference image.

312 — Threshold the ratio projection image to get a projection image mask that only contains the X-ray line integrals that have intersection with the sample

314 — Back project the projection masks to get an image in the reconstructed image volume space and threshold it to get an image mask $J_m$

316 — Find the bounding box of image mask $J_m$. Only the region inside the bounding box are reconstructed.

318 — During iterative reconstruction, only x-ray line in the projection image masks are considered in back and forward projection. The system matrix needs only be computed inside the bounding box.

## Fig. 4

Acquire sample data by performing a fast preview scan or scan with light camera

330

Determine image mask

332

Forward project mask images to obtain projection mask

334

Find the bounding box of image mask $J_m$. Only the region inside the bounding box are reconstructed.

316

During iterative reconstruction, only X-ray lines in the projection image masks are considered in back and forward projection. The system matrix needs only be computed inside the bounding box.

318

Fig. 5

| | Europäisches Patentamt European Patent Office Office européen des brevets | **EUROPEAN SEARCH REPORT** | **Application Number** EP 25 18 6198 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 969 771 B2 (EDISON WELDING INST INC [US]) 6 April 2021 (2021-04-06)<br>* abstract *<br>* figure 1 *<br>* column 2, line 1 - line 14 *<br>----- | 1-13 | INV.<br>G06T11/00 |
| X | ZHENG YIFAN ET AL: "A generalization of the maximum likelihood expectation maximization (MLEM) method: Masked-MLEM",<br>20231211,<br>vol. 68, no. 24,<br>11 December 2023 (2023-12-11),<br>XP020485896,<br>DOI: 10.1088/1361-6560/AD0900<br>[retrieved on 2023-12-11]<br>* abstract *<br>* Sections 2.1 and 4 *<br>----- | 1-13 | |
| X | CARVALHO L E ET AL: "3D Segmentation Algorithms for Computerized Tomographic Imaging: a Systematic Literature Review",<br>JOURNAL OF DIGITAL IMAGING, SPRINGER INTERNATIONAL PUBLISHING, CHAM,<br>vol. 31, no. 6, 18 June 2018 (2018-06-18),<br>pages 799-850, XP036644633,<br>ISSN: 0897-1889, DOI:<br>10.1007/S10278-018-0101-Z<br>[retrieved on 2018-06-18]<br>* abstract *<br>----- | 1-13 | **TECHNICAL FIELDS SEARCHED (IPC)**<br><br>G06T |

-/--

The present search report has been drawn up for all claims

| Place of search | Date of completion of the search | Examiner |
|---|---|---|
| Munich | 25 November 2025 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 25 18 6198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Li Mengzhou: "Spectral CT at Ultra-High Resolution via Photon-Counting and Deep Learning", ProQuest Dissertations & Theses Global: The Sciences and Engineering Collection, 1 August 2023 (2023-08-01), XP093146130, Retrieved from the Internet: URL:https://www.proquest.com/dissertations-theses/spectral-ct-at-ultra-high-resolution-via-photon/docview/2869454979/se-2?accountid=29404 [retrieved on 2024-03-27] * the whole document * ----- | 1-13 | |
| A | JUSTIN C PARK ET AL: "mask guided image reconstruction (-MGIR) for ultra-low dose cone-beam computed tomography", PHYSICS IN MEDICINE AND BIOLOGY, INSTITUTE OF PHYSICS PUBLISHING, BRISTOL GB, vol. 60, no. 21, 20 October 2015 (2015-10-20), pages 8505-8524, XP020290384, ISSN: 0031-9155, DOI: 10.1088/0031-9155/60/21/8505 [retrieved on 2015-10-20] * the whole document * ----- | 1-13 | TECHNICAL FIELDS SEARCHED (IPC) |

The present search report has been drawn up for all claims

| Place of search | Date of completion of the search | Examiner |
|---|---|---|
| Munich | 25 November 2025 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 18 6198

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2025

| Patent document cited in search report | | Publication date | Patent family member(s) | | Publication date |
|---|---|---|---|---|---|
| US 10969771 | B2 | 06-04-2021 | US | 2020393823 A1 | 17-12-2020 |
| | | | WO | 2020251760 A1 | 17-12-2020 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63669796

- US 11821860 B, Omlor and Chang

**Non-patent literature cited in the description**

- **FELDKAMP, L.A** ; **DAVIS, L.C.** ; **KRESS, J.W**. Practical Cone-Beam Algorithm.. *Journal of the Optical Society of America A*, 1984, vol. 1, 612-619

- **LIN, Q** ; **ANDREW, M.** ; **THOMPSON, W** ; **BLUNT, M.J.** ; **BIJELJIC, B.** Optimization of image quality and acquisition time for lab-based X-ray microtomography using an iterative reconstruction algorithm. *Advances in Water Resources*, 2018, vol. 115, 112-124